# EUROPÄISCHE PATENTSCHRIFT

(11) **EP 3 221 180 B1**
(45) Veröffentlichungstag und Bekanntmachung des Hinweises auf die Patenterteilung: **21.04.2021**
(21) Anmeldenummer: 15793706.1
(22) Anmeldetag: 04.11.2015
(51) Int. Cl.: B60L 53/36, B60L 53/38, B60L 53/122

(54) **SYSTEM ZUM INDUKTIVEN ÜBERTRAGEN VON ELEKTRISCHER LEISTUNG**
SYSTEM FOR INDUCTIVELY TRANSMITTING ELECTRICAL POWER
SYSTÈME DE TRANSMISSION DE PUISSANCE ÉLECTRIQUE PAR INDUCTION

(30) Priorität: 20.11.2014 DE 102014017070; 10.04.2015 DE 102015004387
(43) Veröffentlichungstag der Anmeldung: 27.09.2017
(73) Patentinhaber: SEW-EURODRIVE GmbH & Co. KG, 76646 Bruchsal (DE)
(72) Erfinder: SCHNEIDER, Bernhard, 68794 Oberhausen-Rheinhausen (DE); MAHLEIN, Jochen, 76139 Karlsruhe (DE)
(86) Internationale Anmeldenummer: PCT/EP2015/002208
(87) Internationale Veröffentlichungsnummer: WO 2016/078749

(56) Entgegenhaltungen:
- EP-A1- 2 317 624
- EP-A1- 2 530 812
- DE-T5-112012 003 140
- US-A1- 2010 052 431
- US-A1- 2014 327 391

## Beschreibung

Die Erfindung betrifft ein System zum induktiven Übertragen von elektrischer Leistung.

Aus der DE 44 46 779 C2 ist bekannt, dass Energie induktiv über Transformatoren übertragbar ist.

**Aus der** EP 2 530 812 A1 **ist als nächstliegender Stand der Technik berührungslose Übertragung elektrischer Energie an ein Fahrzeug bekannt.**

**Aus der** US 2014/327391 A1 **ein Mittel zur induktiven Aufladung eines Elektrofahrzeugs bekannt, das eine reduzierte Dicke aufweist.**

**Aus der** US 2010/052431 A1 **ist eine berührungslose Übertragung elektrischer Energie mit magnetischer Resonanz bekannt.**

**Aus der** EP 2 317 624 A1 **ist eine induktive Versorgung für eine Tischlampe bekannt.**

**Aus der** DE 11 2012 003 140 T5 **ist eine drahtlose Energieübertragung mittels Resonanzantennen bekannt.**

Der Erfindung liegt daher die Aufgabe zugrunde, ein System weiterzubilden, wobei Missnutzungen verhinderbar sind.

Erfindungsgemäß wird die Aufgabe bei dem System nach den in Anspruch 1 angegebenen Merkmalen gelöst.

Wichtige Merkmale der Erfindung bei dem System zum induktiven Übertragen von elektrischer Leistung sind, dass ein Fahrzeug metallische Teile und eine Sekundärspule aufweist, die eine Sekundärwicklung und als Spulenkern vorgesehenes Ferritmaterial aufweist,
wobei eine Primärwicklung stationär angeordnet ist, der eine Kapazität zur Bildung eines Schwingkreises zugeschaltet ist, insbesondere in Reihe oder parallel,
**wobei** eine Auswerteeinheit zur Bestimmung der Resonanzfrequenz des Schwingkreises mit der Primärwicklung elektrisch verbunden ist,
wobei ein Mittel zum Vergleich der bestimmten Resonanzfrequenz mit einem ersten Frequenzwert f1 und mit einem zweiten Frequenzwert f2 vorgesehen ist insbesondere dessen mindestens ein Ausgang einen Aktor, wie Relais oder dergleichen, ansteuert.

**Erfindungsgemäß wird** mit Überschreiten des Wertes f1 ein Eintreffen eines **Fahrzeugs und** mit Unterschreiten des Wertes f2 das Erreichen einer Position optimaler induktiver Kopplung der Sekundärspule samt Ferritmaterial zu der Primärwicklung **erkannt. Von Vorteil ist dabei, dass somit** nur die jeweils aktuelle Resonanzfrequenz des Schwingkreises bestimmt werden **muss,** also vorzugsweise wiederholt zeitlich regelmäßig beabstandet. Somit ist also eine Missnutzung verhinderbar. Denn nur bei vorhandener Sekundärspule wird der Primärstrom freigegeben und somit eine Beladung des Fahrzeugs, insbesondere ein Aufladen des Energiespeichers des Fahrzeugs, ausgeführt. Ein Fahrzeug ohne Sekundärwicklung wird also nicht beladen.

Bei einer vorteilhaften Ausgestaltung ist an der Primärwicklung weiteres Ferritmaterial angeordnet, das als Spulenkern für die Primärwicklung wirksam ist. Von Vorteil ist dabei, dass auch eine Erkennung von der Fahrzeugseite aus ausführbar ist. Denn das Ferritmaterial hat auch hier wiederum die Wirkung, die Resonanzfrequenz eines weiteren Schwingkreises, der aus einer Kapazität und der Sekundärspule besteht, zu beeinflussen. Insbesondere wird diese Resonanzfrequenz abgesenkt, wenn das Fahrzeug sich der Primärwicklung nähert und somit das an der Primärwicklung angeordnete Ferritmaterial sich der Sekundärwicklung nähert.

Bei einer vorteilhaften Ausgestaltung ist der erste Frequenzwert f1 größer als der zweite Frequenzwert f2,
insbesondere wobei der erste Frequenzwert f1 größer ist als diejenige Resonanzfrequenz, welche der Schwingkreis aufweist bei Nichtvorhandensein des Fahrzeugs,
insbesondere wobei der zweite Frequenzwert f2 kleiner ist als diejenige Resonanzfrequenz, welche der Schwingkreis aufweist bei Nichtvorhandensein des Fahrzeugs. Von Vorteil ist dabei, dass die metallischen Teile des Fahrzeugs eine Erhöhung der Resonanzfrequenz bewirken, also das Fahrzeug bei Überschreiten der höheren Frequenz f1 erkennbar ist und das Ferritmaterial der Sekundärspule die Resonanzfrequenz erniedrigt, sobald es der Primärwicklung nahe genug kommt. Somit ist bei Unterschreiten der kleineren Frequenz f2 ein Erkennen des Ferritmaterials der Sekundärspule, also somit auch eines induktiv beladbaren Fahrzeugs, ausführbar.

Bei einer vorteilhaften Ausgestaltung ist die Sekundärspule von mindestens einem metallischen Teil umgeben, insbesondere in einer durch die Sekundärspule durchgehenden Ebene, welche parallel zur Verfahrebene des Fahrzeugs ausgerichtet ist. Von Vorteil ist dabei, dass bei Annäherung des Fahrzeugs an die Primärwicklung zuerst die metallischen Teile in den Nahbereich, also sensitiven Bereich, der Primärwicklung gelangen, so dass die Resonanzfrequenz erhöht wird. Erst wenn das Ferritmaterial der Sekundärspule in den Nahbereich, also sensitiven Bereich, der Primärwicklung gelangt, ist ein Absenken der Resonanzfrequenz ausführbar.

Bei einer vorteilhaften Ausgestaltung ist eine die Kapazität umfassende Einspeiseeinheit von dem Mittel derart ansteuerbar, dass bei Unterschreiten des zweiten Frequenzwertes f2 ein mittelfrequenter Strom von der Einspeiseeinheit in die Primärwicklung eingeprägt wird,
insbesondere und dass bei Überschreiten des zweiten Frequenzwertes f2 der von der Einspeiseeinheit in die Primärwicklung eingeprägte mittelfrequente Strom abgeschaltet wird. Von Vorteil ist dabei, dass Energie einsparbar ist, weil die Einspeiseeinheit ausschaltbar ist, solange kein Fahrzeug erkannt wurde.

Bei einer vorteilhaften Ausgestaltung weist die Auswerteeinheit einen Oszillator auf, dessen erzeugte Frequenz steuerbar ist. Von Vorteil ist dabei, dass die Resonanzfrequenz in einfacher Weise ermittelbar ist, indem die vom Oszillator erzeugte Frequenz dem Schwingkreis zugeführt wird und der Strom im Oszillator, die zugehörige Spannung oder Impedanz erfasst wird, so dass die vom Oszillator erzeugte Frequenz derart gesteuert wird, dass der erfasste Wert auf ein Optimum hin geregelt wird.

Bei einer vorteilhaften Ausgestaltung weist die Auswerteeinheit einen Regler auf, dem erfasste Werte einer physikalischen Größe, insbesondere ein Strom oder eine Spannung, des Oszillators zugeführt werden und der die Frequenz des Oszillators derart stellt, dass ein Optimum der physikalischen Größe erreicht wird. Von Vorteil ist dabei, dass die Resonanzfrequenz in einfacher Weise ermittelbar ist, indem die vom Oszillator erzeugte Frequenz dem Schwingkreis zugeführt wird und der Strom im Oszillator, die zugehörige Spannung oder Impedanz erfasst wird, so dass die vom Oszillator erzeugte Frequenz derart gesteuert wird, dass der erfasste Wert auf ein Optimum hin geregelt wird.

Bei einer vorteilhaften Ausgestaltung ist der Sekundärspule eine weitere Kapazität zur Bildung eines weiteren Schwingkreises zugeschaltet, insbesondere in Reihe oder parallel,
wobei eine am Fahrzeug angeordnete, weitere Auswerteeinheit zur Bestimmung der Resonanzfrequenz des weiteren Schwingkreises mit der Sekundärspule elektrisch verbunden ist,
wobei ein weiteres, insbesondere von der Auswerteeinheit umfasstes, Mittel zum Vergleich der bestimmten Resonanzfrequenz des weiteren Schwingkreises mit einem dritten Frequenzwert f1 und/oder mit einem vierten Frequenzwert f2 vorgesehen ist. Von Vorteil ist dabei, dass auch eine fahrzeugseitige Erkennung ausführbar ist.

Bei einer vorteilhaften Ausgestaltung ist der dritte Frequenzwert größer als der vierte Frequenzwert,
insbesondere wobei der dritte Frequenzwert größer ist als diejenige Resonanzfrequenz, welche der weitere Schwingkreis aufweist bei Nichtvorhandensein des Fahrzeugs,
insbesondere wobei der vierte Frequenzwert kleiner ist als diejenige Resonanzfrequenz, welche der weitere Schwingkreis aufweist bei Nichtvorhandensein des Fahrzeugs. Von Vorteil ist dabei, dass wiederum ein Erkennen der Primärwicklung in einfacher Weise ausführbar ist.

Bei einer vorteilhaften Ausgestaltung weist die weitere Auswerteeinheit einen Oszillator auf, dessen erzeugte Frequenz steuerbar ist. Von Vorteil ist dabei, dass wiederum eine einfache Bestimmung der Resonanzfrequenz ausführbar ist. Hierzu wird die Frequenz des Oszillators wiederum derart gesteuert, dass eine erfasste Größe ihr Optimum erreicht, beispielsweise bei Ausführung des Schwingkreises als Parallelschwingkreis der dem Schwingkreis zugeführte Strom minimal ist oder bei Ausführung des Schwingkreises als Serienschwingkreis der dem Schwingkreis zugeführte Strom maximal ist.

Bei einer vorteilhaften Ausgestaltung weist die weitere Auswerteeinheit einen Regler auf, dem erfasste Werte einer physikalischen Größe, insbesondere ein Strom oder eine Spannung, des Oszillators der weiteren Auswerteeinheit zugeführt werden und der die Frequenz des Oszillators derart stellt, dass ein Optimum der physikalischen Größe erreicht wird. Von Vorteil ist dabei, dass ein einfacher Regler ausreichend ist, insbesondere ein linearer Regler.

Bei einer vorteilhaften Ausgestaltung ist die Primärwicklung als Leiterschleife zusätzlich zu einer Primärspule vorgesehen,
insbesondere wobei die Primärspule mit einem mittelfrequenten Strom beaufschlagbar ist zur Leistungsübertragung an die Sekundärspule des Fahrzeugs,
wobei die Primärspule galvanisch getrennt ist von der Primärwicklung,
insbesondere wobei die Primärspule und die Primärwicklung eben ausgeführt sind, insbesondere als Flachwicklung, und zueinander parallel angeordnet sind, insbesondere stationär, insbesondere also bodenseitig. Von Vorteil ist dabei, dass die Primärwicklung dann nur zur Erkennung des Fahrzeugs verwendet wird und die Primärspule zur Leistungsübertragung. Somit weist der Wicklungsdraht der Primärspule eine mindestens zehnmal größere Querschnittsfläche auf als der Wicklungsdraht der Primärwicklung.

Bei einer vorteilhaften Ausgestaltung ist ein steuerbarer Schalter, insbesondere Kurzschließer, zum Kurzschließen der Sekundärwicklung am Fahrzeug angeordnet,
wobei ein Mittel zum Erzeugen eines getakteten, insbesondere gleichmäßig getakteten oder pulsweitenmodulierten, Ansteuersignals des steuerbaren Schalters am Fahrzeug angeordnet ist,
insbesondere wobei ein Auswertemittel zum Detektieren des vom Ansteuersignal bewirkten Verstimmens der bestimmten Resonanzfrequenz vorgesehen ist, insbesondere stationärseitig angeordnet ist, insbesondere also in der Auswerteeinheit. Von Vorteil ist dabei, dass die Sekundärspule zeitlich wiederkehrend kurzschließbar ist und das dadurch bewirkte entsprechend wechselnde Ändern der Impedanz die Resonanzfrequenz entsprechend verstimmt. Mittels Erkennen dieser Verstimmungsänderung ist also Information übertragbar vom Fahrzeug an die stationäre Seite. Insbesondere ist die Information erkennbar, dass das Fahrzeug beladbar ist, weil beispielsweise der Energiespeicher des Fahrzeugs nicht vollständig aufgeladen ist. Außerdem ist mittels des Tastverhältnisses oder der Modulation des Tastverhältnisses des Ansteuersignals für den Kurzschließer weitere Information übertragbar, wie beispielsweise die maximal zulässige Ladeleistung oder dergleichen.

Die Erfindung wird nun anhand von Abbildungen näher erläutert:

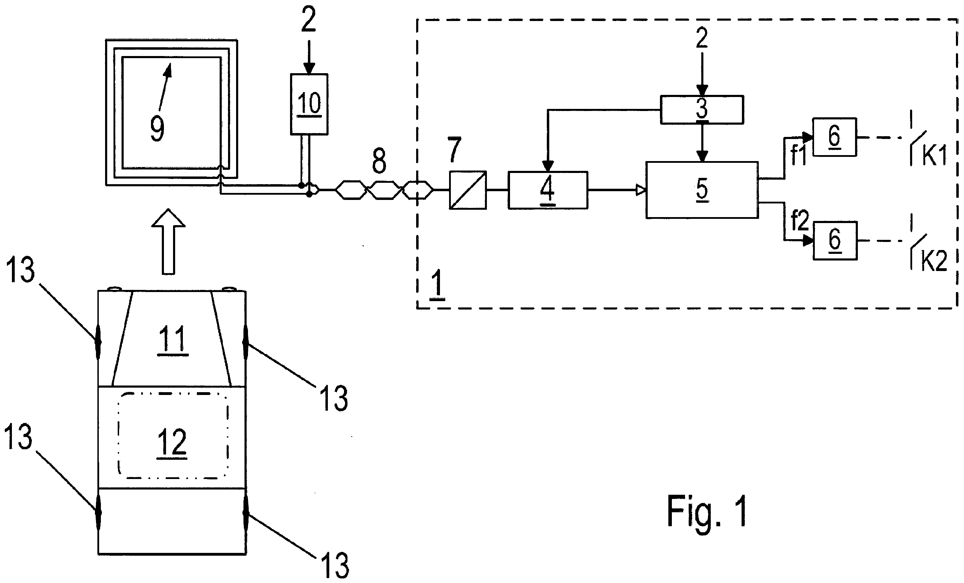

In der Figur 1 ist eine erfindungsgemäße Ladeanordnung zur induktiven Energieübertragung an ein Fahrzeug dargestellt.
In der Figur 2 ist die von der Fahrzeugposition X abhängige Resonanzfrequenz f der Primärseite der Ladeanordnung dargestellt.
In der Figur 3 ist im Unterschied zur Figur 1 eine zusätzlich vorhandene Datenübertragung durch gesteuertes Kurzschließen der Sekundärspule 12 schematisch dargestellt.
In der Figur 4 ist der zur Figur 3 zugehörige zeitliche Ablauf schematisch dargestellt mit Zeitachse t, insbesondere wobei den Positionen X1 und X2 aus Figur 2 die Zeitpunkte t1 und t2 entsprechen.

Wie in den Figuren gezeigt, weist das Räder 13 aufweisende Fahrzeug 11 an seiner Unterseite eine Sekundärspule 12 auf, die auch einen Spulenkern aus Ferrit aufweist.

Das Fahrzeug weist an seiner Unterseite metallisches Material auf, das elektrisch leitfähig ist. Wichtig ist dabei, dass bei der verwendeten Mittelfrequenz des in die Primärwicklung eingeprägten Wechselstromes das Material nicht magnetfeldverstärkend, sondern magnetfeldverdrängend wirkt. Bei dieser Mittelfrequenz steht also die Feldverdrängung im Vordergrund, ein Führen der mittelfrequenten Magnetwechselfelder ist verhindert oder zumindest stark vermindert im Gegensatz zur Niederfrequenz. Das Verhalten des Materials im mittelfrequenten Beriech ist also nicht ferromagnetisch, obwohl das Material sich im niederfrequenten Bereich ferromagnetisch verhält.

Die Sekundärspule 12 des Fahrzeugs jedoch umfasst wie auch die Primärwicklung 9 Ferrit, das feldverstärkend wirkt.

Die am Boden angeordnete, also stationär vorgesehene Primärwicklung 9 wird von einer Einspeiseeinheit 10 mit einem mittelfrequenten Wechselstrom beaufschlagt. Die Einspeiseeinheit weist hierbei auch eine Kapazität auf, welche mit der Primärwicklung 9 zusammen einen Schwingkreis bildet. Die Resonanzfrequenz des Schwingkreises beträgt bei Abwesenheit des Fahrzeugs 11 den Frequenzwert f0.

Wenn nun das Fahrzeug 11 sich der Primärwicklung nähert, treten zunächst die metallischen Teile des Fahrzeugs in den sensitiven Beriech der Primärwicklung 9 ein und erniedrigen die Induktivität der Primärwicklung 9 durch die magnetfeldverdrängende Wirkung der metallischen, also elektrisch leitfähigen Teile. Dabei wird also die Resonanzfrequenz f erhöht. Sobald jedoch die Sekundärspule samt ihrem Ferrit-Spulenkern in den sensitiven Bereich der Primärwicklung 9 eintritt, wird die Induktivität der Primärwicklung erhöht und somit die Resonanzfrequenz f erniedrigt.

Auf diese Weise ist also ein Erkennen eines Fahrzeugs durch Erkennen des Überschreitens des Wertes f1 durch die Resonanzfrequenz f durchführbar. Ebenso ist ein Erkennen des Vorhandenseins einer Sekundärspule mit Ferrit ausführbar, indem erkannt wird, dass der Wert f2 durch die Resonanzfrequenz unterschritten wird.

Dabei ist der Wert f2 kleiner als der Wert f1, wobei der Wert f2 auch kleiner ist als der Wert f0, also der Wert der Resonanzfrequenz bei nicht vorhandenem Fahrzeug 11. Ebenso ist der Wert f1 größer als der Wert f0.

Vorzugsweise wird die Bestimmung der Resonanzfrequenz f nur ausgeführt, wenn von der Einspeiseeinheit 10 kein mittelfrequenter Strom eingeprägt wird in die Primärwicklung 9.

Sobald das Vorhandensein eines Fahrzeugs 11 erkannt wird, das auch eine Sekundärspule 12 samt Ferritmaterial aufweist, wird von der Einspeiseeinheit 10 ein mittelfrequenter Strom in die Primärwicklung 9 eingeprägt, dessen Resonanzfrequenz f der Resonanzfrequenz des Schwingkreises entspricht bei vorhandenem Ferritmaterial.

Zur Erkennung ist eine Auswerteeinheit 1 vorgesehen, die bei Erkennen des Annäherns von metallischen, also elektrisch leitfähigen, Teilen, also Überschreiten des Wertes f1 durch die Resonanzfrequenz, ein erstes Relais K1 ansteuert (6) und somit einschaltet und bei Erkennen des Annäherns von Ferritmaterial, also Unterschreiten des Wertes f2 durch die Resonanzfrequenz, ein zweites Relais K2 ansteuert (6) und somit einschaltet. Dies

Die Auswerteeinheit 1 ist hierzu mit der Primärwicklung 9 mittels einer verdrillten Zuleitung 8 verbunden. Mittels der verdrillten Zuleitung 8 ist die Primärwicklung 9 mit der Primärseite eines Übertragers 7, insbesondere eines galvanisch entkoppelnden transformatorischen Übertragers 7, verbunden. Die Sekundärseite des Übertragers 7 ist mit einem Oszillator 4 mit steuerbarer Resonanzfrequenz f verbunden, der aus der Spannungsversorgung 3 gespeist ist, welche mit dem Wechselspannungsnetz 2 verbunden ist. Ein Mikroprozessor 5 steuert des Oszillator derart an, dass die vom Oszillator 4 erzeugte Frequenz f auf die Resonanzfrequenz des aus der Primärwicklung 9 und der von der Einspeiseeinheit umfassten Kapazität gebildeten Schwingkreises hingeregelt wird. Hierzu wird beispielsweise der Strom im Oszillator 4 erfasst und durch Stellen der Frequenz des Oszillators 4 auf ein Optimum hingeregelt. Wenn beispielsweise der Schwingkreis als Parallelschwingkreis ausgeführt ist, ist das Optimum ein Minimum, und wenn alternativ der Schwingkreis als Serienschwingkreis ausgeführt ist, ist das Optimum ein Maximum.

Somit wird dem Mikroprozessor 5 nicht nur der erfasste Stromwert des Oszillators 4 zugeführt, sondern im Mikroprozessor 5 ist auch ein Regler ausgeführt, der beispielsweise als linearer Regler, wie P-Regler, PI-Regler oder PID-Regler, ausgeführt ist.

Sobald der Frequenzwert f1 durch die Stellgröße des Regler, also die Frequenz f des Oszillators 4 überschritten wird, wird vom Mikroprozessor ein Ansteuersignal für das Relais K1 ausgegeben.

Sobald der Frequenzwert f2 durch die Stellgröße des Regler, also die Frequenz f des Oszillators 4 unterschritten wird, wird vom Mikroprozessor ein Ansteuersignal für das Relais K2 ausgegeben.

Durch Einschalten des Relais K1 wird beispielsweise ein Warnsignal akustisch, optisch anzeigbar oder über einen Kommunikationskanal meldbar, weil ein Fahrzeug 11 erkannt wurde, aber keine induktive Übertragung ausführbar ist.

Wenn jedoch das Relais K2 angesteuert wird, wird die Einspeiseeinheit 10 angeschaltet, so dass eine Übertragung von Energie von der Primärwicklung 9 an die Sekundärspule 12 ausgeführt wird. Die übertragene Energie wird zumindest teilweise in einem Energiespeicher des Fahrzeugs 11 abgespeichert. Nach Verlassen des empfindlichen Bereichs der Primärwicklung 9 durch das Fahrzeug 11 wird die Einspeiseeinheit 10 abgeschaltet. Somit ist ein Einsparen von Verlustenergie ermöglicht, da das Vorrätighalten von Speisespannung Energiezufuhr an die Einspeiseeinheit 10 erfordert.

Die Positionierung eines Fahrzeugs 11 über der Primärwicklung 9 ist ebenfalls verbessert ausführbar, wenn die Position derart gesteuert wird, dass die von der Auswerteeinheit 1 bestimmte Resonanzfrequenz f ein Minimum erreicht. Denn das Ferritmaterial senkt die Resonanzfrequenz ab und zwar am stärksten, wenn die Sekundärspule 12 eine maximale induktive Kopplungsstärke zur Primärwicklung 9 aufweist.

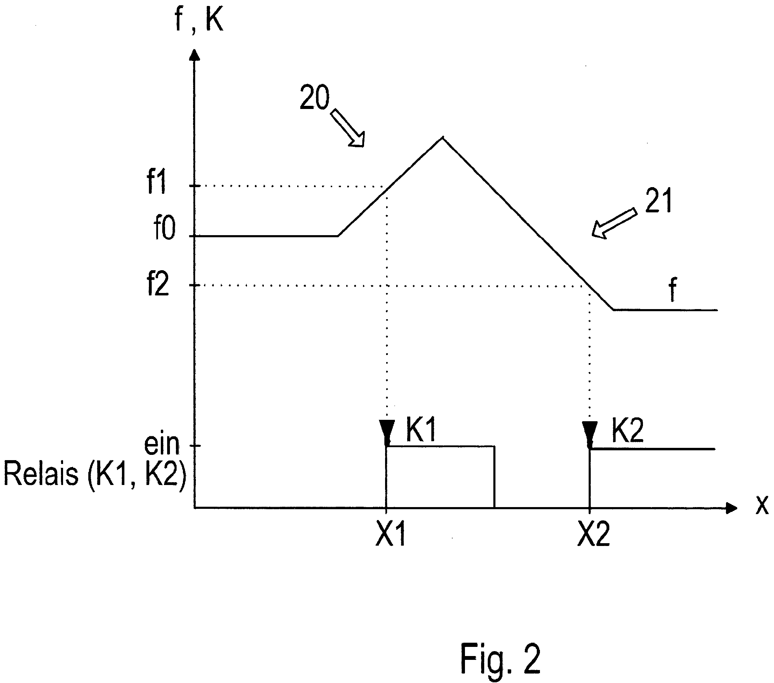

Wie in Figur 2 gezeigt, ist die Position X des Fahrzeugs 11 und somit linear abhängig vom Abstand zur Position Position mit der Position der optimalen induktiven Kopplung zwischen Sekundärwicklung12 und Primärwicklung 9.

Bei der ersten Position X1, bei welcher das Eintreffen eines Fahrzeugs an der Primärwicklung 12 erkannt wird, erreicht die Resonanzfrequenz den Frequenzwert f1.

Bei der zweiten Position X2, bei welcher das Vorhandensein einer Ferrit-aufweisenden Sekundärspule des Fahrzeugs erkannt wird, erreicht die Resonanzfrequenz den Frequenzwert f2.

Bei einem weiteren erfindungsgemäßen Ausführungsbeispiel ist die beschriebene Erkennung alternativ oder auch zusätzlich fahrzeugseitig vorgesehen. Hierzu ist also eine Auswerteeinheit mit der Sekundärspule verbunden. Bei Annäherung des Fahrzeugs 11 an die Primärwicklung 9 wird ein als Spulenkern an der Primärwicklung angeordnetes Ferritmaterial erkannt, indem die Resonanzfrequenz des aus der Sekundärspule und einer auf dem Fahrzeug angeordneten Kapazität gebildeten Schwingkreises absinkt unter einen vorgegebenen Schwellenwert.

Bei einem weiteren erfindungsgemäßen Ausführungsbeispiel ist alternativ zur direkten Nutzung der Primärwicklung zur Erkennung des Fahrzeugs die Nutzung die Primärwicklung als eigenständige Leiterschleife ausgeführt, insbesondere innerhalb einer Primärspule, als Detektorwicklung - bei ansonsten gleicher Funktionalität - denkbar. Somit ist eine galvanische Trennung der Primärspule 9, die dann nur zur Leistungsübertragung dient, und der als Leiterschleife ausgeführten Primärwicklung, die dann nur zur Erkennung des Fahrzeugs dient, erreicht. Primärspule und Primärwicklung sind beide am Boden angeordnet und vorzugsweise als zueinander parallel angeordnete, ebene Wicklungen Spulenwicklungen ausgeführt, aber voneinander galvanisch getrennt.

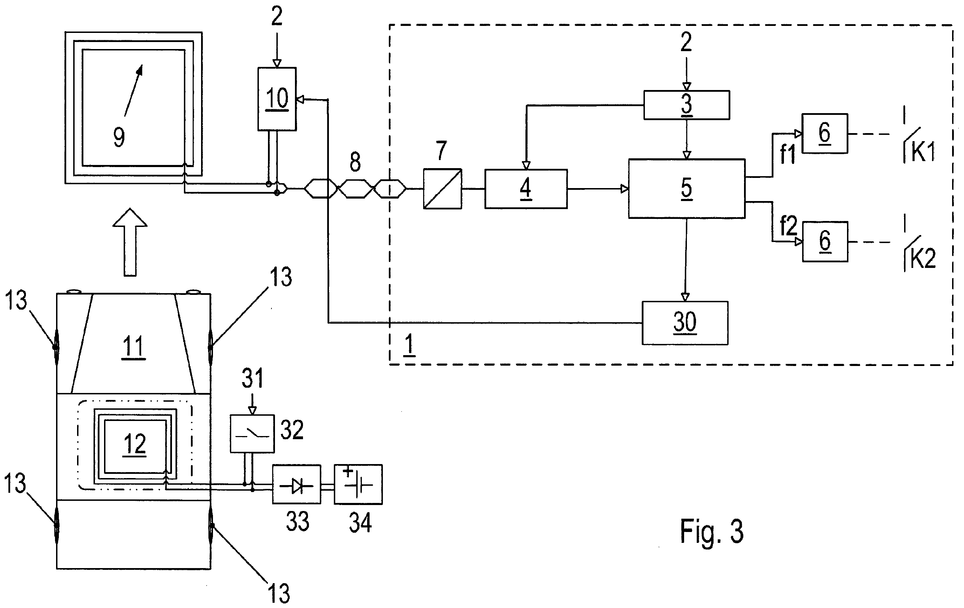

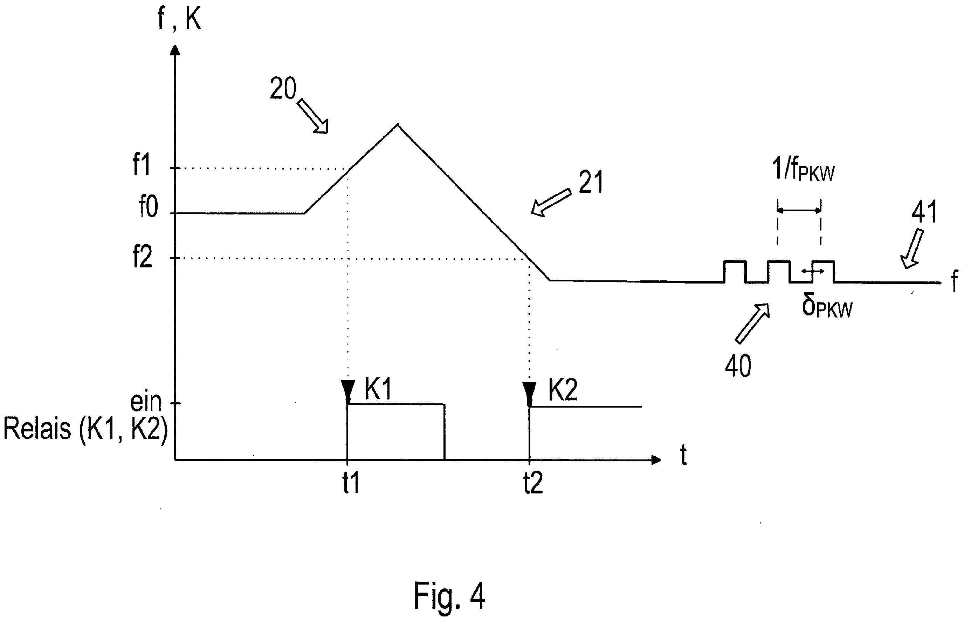

**Wie in** **Figur 3** **und** **4** **dargestellt, wird in dem entsprechenden erfindungsgemäßen weiteren Ausführungsbeispiel stationärseitig eine Auswerteeinheit 30 vorgesehen, die ein modulieren der Impedanz detektierbar macht. Abhängig von dem erkannten modulierten Signal, wird dann die Einspeiseeinheit freigegeben und gesteuert.**

**Fahrzeugseitig ist ein als steuerbarer Schalter 32 zusätzlich vorgesehen, welcher zum Kurzschließen der Sekundärspule 12 verwendbar ist. Das zugehörige Ansteuersignal 31 des Schalters 32 wird von einer elektronischen Schaltung des Fahrzeugs erzeugt oder stationärseitig über einen Kommunikationskanal, beispielsweise Infrarot oder Funk, gesendet und vom Fahrzeug empfangen.**

**Der Schalter 32, insbesondere Kurzschließer, ist an der Eingangsseite des Gleichrichters 33 angeschlossen, aus welchem der Energiespeicher 34 des Fahrzeugs speisbar ist.**

**Das modulierte Kurzschließen bewirkt eine entsprechende Impedanzänderung, die stationärseitig detektierbar ist. Daher bewirkt das Ansteuersignal 31 ein binäres Impedanz-Toggelsignal, wodurch das Fahrzeug nach erfolgreicher Positionierung der Stationärseite**
**Informationen mitteilen kann.**

**Hierzu schließt der ansteuerbare elektronische Schalter 32 in zyklischem Wechsel die Sekundärschleife, also Fahrzeug-Pick-Up, kurz und öffnet sie wieder.**

**Dies geschieht mit einer exakt festgelegten Frequenz f_PKW und** / **oder zusätzlich mit einem definierten Tastgrad δ_PKW, also Verhältnis von Einschaltzeit zu Ausschaltzeit.**

**Hierdurch lassen sich Informationen über Fahrzeugtyp und/oder gewünschte Ladeleistung zur Stationärseite übertragen, bevor die Ladung beginnt, also in dem Zeitabschnitt für Datenübertragung 40, der vor dem Zeitabschnitt der Beladung, also Energieübertragung 41, angeordnet ist.**

**Auf der Stationärseite wird der Wechsel zwischen kurzgeschlossener und leerlaufender Sekundärspule als wechselnde, insbesondere also toggelnde, Impedanz erkennbar.**

**In der als Schleifendetektor wirksamen Auswerteeinheit 1 wird zwar das System mit seiner Eigenfrequenz fo auf der Stationärseite angeregt, aber durch die wechselnde Impedanz jeweils um ein Δf verstimmt, wodurch die toggelnde Impedanz als Frequenztoggel erkennbar wird.**

**Die so gewonnenen Informationen, beispielsweise Ladeleistung, Freigabe, werden dann zur Steuerung der Leistungsstufe verwendet.**
**Wenn also der Energiespeicher voll ist und daher das Fahrzeug nur geparkt aber nicht mit Energie beladen werden soll, ist mittels des nicht erzeugten Toggelsignals ein Energieübertragen verhinderbar.**

**In Weiterbildung ist mittels eines entsprechend ausgestalteten Kurzschließers im Fahrzeug auch während der Leistungsübertragung die Pick-Up-Spule kurzschließbar, da diese ein Stromquellenverhalten aufweist.**

**Eine solchermaßen kurzgeschlossene Pick-Up-Spule wird auf der Stationärseite dadurch sichtbar, dass die gesteuerte Leistung nicht mehr zustande kommt, insbesondere also während der Energieübertragung 41. Wird dieser Zustand erkannt, sperrt die Einspeiseeinheit die Leistungsabgabe komplett. Anschließend besteht dann wieder die Möglichkeit, dass das Fahrzeug über einen neuen "Impedanz- toggelzyklus" neue, geänderte Ladevorgaben an die Stationärseite übermittelt und die Beladung fortgesetzt oder wieder aufgenommen wird.**

### Bezugszeichenliste

1 Auswerteeinheit
2 Wechselspannungsnetz
3 Erzeugung der Spannungsversorgung
4 Oszillator mit steuerbarer Resonanzfrequenz
5 Mikroprozessor
6 Ansteuerung für Relais (K1, K2)
7 Übertrager, insbesondere galvanisch entkoppelnder transformatorischer Übertrager
8 verdrillte Zuleitung
9 Primärwicklung, stationär angeordnet, insbesondere am Boden
10 mittelfrequente Einspeiseeinheit mit Wechselstromquelle und Kapazität
11 Fahrzeug
12 Sekundärspule, aufweisend Spulenkern aus Ferrit
13 Räder
20 Erhöhung der Frequenz
21 Verminderung der Frequenz
**30 Auswerteeinheit**
**31 Ansteuersignal**
**32 Schalter, insbesondere Kurzschließer**
**33 Gleichrichter**
**34 Energiespeicher**
**40 Datenübertragung**
**41 Energieübertragung**
f Frequenz
f0 Resonanzfrequenz bei nicht vorhandenem Fahrzeug
f1 erster Frequenzwert
f2 erster Frequenzwert
K1 erstes Relais
K2 zweites Relais
X Position des Fahrzeugs relativ zu
X1 erste Position, bei welcher das Eintreffen eines Fahrzeugs erkannt wird
X2 zweite Position, bei welcher das Vorhandensein einer Ferrit-aufweisenden Sekundärspule des Fahrzeugs erkannt wird

## Patentansprüche

1. System zum induktiven Übertragen von elektrischer Leistung,
wobei ein Fahrzeug metallische Teile und eine Sekundärspule aufweist, die eine Sekundärwicklung und als Spulenkern vorgesehenes Ferritmaterial aufweist,
wobei eine Primärwicklung stationär angeordnet ist, der eine Kapazität zur Bildung eines Schwingkreises zugeschaltet ist, insbesondere in Reihe oder parallel,
**wobei** eine Auswerteeinheit zur Bestimmung der Resonanzfrequenz des Schwingkreises mit der Primärwicklung elektrisch verbunden ist,
wobei ein Mittel zum Vergleich der bestimmten Resonanzfrequenz mit einem ersten Frequenzwert f1 und
mit einem zweiten Frequenzwert f2 vorgesehen ist,
insbesondere dessen mindestens ein Ausgang einen Aktor, wie Relais oder dergleichen, ansteuert,
**dadurch gekennzeichnet, dass**
**der erste Frequenzwert f1 größer ist als der zweite Frequenzwert f2,**
**wobei mit Überschreiten des Wertes f1 ein Eintreffen eines Fahrzeugs und mit Unterschreiten des Wertes f2** das Erreichen einer Position optimaler induktiver Kopplung der Sekundärspule samt Ferritmaterial zu der **Primärwicklung erkannt wird.**

2. System nach Anspruch 1,
**dadurch gekennzeichnet, dass**
**der erste Frequenzwert f1 größer ist als diejenige Resonanzfrequenz, welche der Schwingkreis aufweist bei Nichtvorhandensein des Fahrzeugs.**

3. System nach Anspruch 1 oder 2,
**dadurch gekennzeichnet, dass**
**der zweite Frequenzwert f2 kleiner ist als diejenige Resonanzfrequenz, welche der Schwingkreis aufweist bei Nichtvorhandensein des Fahrzeugs.**

4. System nach mindestens einem der vorangegangenen Ansprüche,
**dadurch gekennzeichnet, dass**
an der Primärwicklung weiteres Ferritmaterial angeordnet ist, das als Spulenkern für die Primärwicklung wirksam ist.

5. System nach mindestens einem der vorangegangenen Ansprüche,
**dadurch gekennzeichnet, dass**
die Sekundärspule von mindestens einem metallischen Teil umgeben ist, insbesondere in einer durch die Sekundärspule durchgehenden Ebene, welche parallel zur Verfahrebene des Fahrzeugs ausgerichtet ist.

6. System nach mindestens einem der vorangegangenen Ansprüche,
**dadurch gekennzeichnet, dass**
eine die Kapazität umfassende Einspeiseeinheit von dem Mittel derart ansteuerbar ist, dass bei Unterschreiten des zweiten Frequenzwertes f2 ein mittelfrequenter Strom von der Einspeiseeinheit in die Primärwicklung eingeprägt wird,
insbesondere und dass bei Überschreiten des zweiten Frequenzwertes f2 der von der Einspeiseeinheit in die Primärwicklung eingeprägte mittelfrequente Strom abgeschaltet wird.

7. System nach mindestens einem der vorangegangenen Ansprüche,
**dadurch gekennzeichnet, dass**
die Auswerteeinheit einen Oszillator aufweist, dessen erzeugte Frequenz steuerbar ist.

8. System nach mindestens einem der vorangegangenen Ansprüche,
**dadurch gekennzeichnet, dass**
die Auswerteeinheit einen Regler aufweist, dem erfasste Werte einer physikalischen Größe, insbesondere ein Strom oder eine Spannung, des Oszillators zugeführt werden und der die Frequenz des Oszillators derart stellt, dass ein Optimum der physikalischen Größe erreicht wird.

9. System nach mindestens einem der vorangegangenen Ansprüche,
**dadurch gekennzeichnet, dass**
der Sekundärspule eine weitere Kapazität zur Bildung eines weiteren Schwingkreises zugeschaltet ist, insbesondere in Reihe oder parallel,
wobei eine am Fahrzeug angeordnete, weitere Auswerteeinheit zur Bestimmung der Resonanzfrequenz des weiteren Schwingkreises mit der Sekundärspule elektrisch verbunden ist,
wobei ein weiteres, insbesondere von der Auswerteeinheit umfasstes, Mittel zum Vergleich der bestimmten Resonanzfrequenz des weiteren Schwingkreises mit einem dritten Frequenzwert f1 und/oder mit einem vierten Frequenzwert f2 vorgesehen ist.

10. System nach mindestens einem der vorangegangenen Ansprüche,
**dadurch gekennzeichnet, dass**
der dritte Frequenzwert größer ist als der vierte Frequenzwert,
insbesondere wobei der dritte Frequenzwert größer ist als diejenige Resonanzfrequenz, welche der weitere Schwingkreis aufweist bei Nichtvorhandensein des Fahrzeugs, insbesondere wobei der vierte Frequenzwert kleiner ist als diejenige Resonanzfrequenz, welche der weitere Schwingkreis aufweist bei Nichtvorhandensein des Fahrzeugs.

11. System nach mindestens einem der vorangegangenen Ansprüche,
**dadurch gekennzeichnet, dass**
die weitere Auswerteeinheit einen Oszillator aufweist, dessen erzeugte Frequenz steuerbar ist.

12. System nach mindestens einem der vorangegangenen Ansprüche,
**dadurch gekennzeichnet, dass**
die weitere Auswerteeinheit einen Regler aufweist, dem erfasste Werte einer physikalischen Größe, insbesondere ein Strom oder eine Spannung, des Oszillators der weiteren Auswerteeinheit zugeführt werden und der die Frequenz des Oszillators derart stellt, dass ein Optimum der physikalischen Größe erreicht wird.

13. System nach mindestens einem der vorangegangenen Ansprüche,
**dadurch gekennzeichnet, dass**
die Primärwicklung als Leiterschleife zusätzlich zu einer Primärspule vorgesehen ist, insbesondere wobei die Primärspule mit einem mittelfrequenten Strom beaufschlagbar ist zur Leistungsübertragung an die Sekundärspule des Fahrzeugs,
wobei die Primärspule galvanisch getrennt ist von der Primärwicklung,
insbesondere wobei die Primärspule und die Primärwicklung eben ausgeführt sind, insbesondere als Flachwicklung, und zueinander parallel angeordnet sind, insbesondere stationär, insbesondere also bodenseitig,
insbesondere wobei der Wicklungsdraht der Primärspule eine mindestens zehnmal größere Querschnittsfläche aufweist als der Wicklungsdraht der Primärwicklung.

14. System nach mindestens einem der vorangegangenen Ansprüche,
**dadurch gekennzeichnet, dass**
**ein steuerbarer Schalter, insbesondere Kurzschließer, zum Kurzschließen der Sekundärwicklung am Fahrzeug angeordnet ist,**
**wobei ein Mittel zum Erzeugen eines getakteten, insbesondere gleichmäßig getakteten oder pulsweitenmodulierten, Ansteuersignals des steuerbaren Schalters am Fahrzeug angeordnet ist,**
**insbesondere wobei ein Auswertemittel zum Detektieren des vom Ansteuersignal bewirkten Verstimmens der bestimmten Resonanzfrequenz vorgesehen ist, insbesondere stationärseitig angeordnet ist, insbesondere also in der Auswerteeinheit.**

## Claims

1. A system for the inductive transmission of electric power,
wherein a vehicle has metallic parts and a secondary coil which has a secondary winding and ferrite material provided as a coil core,
wherein a primary winding is arranged in a stationary manner and a capacitor for formation of a resonant circuit is connected thereto, in particular in series or in parallel,
wherein an evaluation unit for determining the resonance frequency of the resonant circuit is electrically connected to the primary winding,
wherein a means for comparison of the determined resonance frequency with a first frequency value f1 and with a second frequency value f2 is provided, in particular whose at least one output controls an actuator, such as a relay or the like,
**characterised in that**
the first frequency value f1 is greater than the second frequency value f2,
wherein an arrival of a vehicle is detected when the value f1 is exceeded and the reaching of a position of optimal inductive coupling of the secondary coil together with ferrite material to the primary winding is detected when there is a fall below the value f2.

2. A system according to claim 1,
**characterised in that**
the first frequency value f1 is greater than that resonance frequency which the resonant circuit has when the vehicle is not present.

3. A system according to claim 1 or 2,
**characterised in that**
the second frequency value f2 is smaller than that resonance frequency which the resonant circuit has when the vehicle is not present.

4. A system according to at least one of the preceding claims,
**characterised in that**
further ferrite material is arranged at the primary winding and is effective as a coil core for the primary winding.

5. A system according to at least one of the preceding claims,
**characterised in that**
the secondary coil is surrounded by at least one metallic part, in particular in a plane passing through the secondary coil, which plane is oriented parallel to the travel plane of the vehicle.

6. A system according to at least one of the preceding claims,
**characterised in that**
a feeding unit comprising the capacitor can be controlled by the means in such a manner that a medium frequency current is supplied to the primary winding by the feeding unit when there is a fall below the second frequency value f2,
in particular and **in that** the medium frequency current supplied to the primary winding by the feeding unit is switched off when the second frequency value f2 is exceeded.

7. A system according to at least one of the preceding claims,
**characterised in that**
the evaluation unit has an oscillator whose produced frequency is controllable.

8. A system according to at least one of the preceding claims,
**characterised in that**
the evaluation unit has a controller which is supplied with acquired values of a physical variable, in particular a current or a voltage, of the oscillator and which adjusts the frequency of the oscillator such that optimum physical variable is achieved.

9. A system according to at least one of the preceding claims,
**characterised in that**
a further capacitor for the formation of a further resonant circuit is connected to the secondary coil, in particular in series or in parallel,
wherein a further evaluation unit, arranged on the vehicle, for determination of the resonance frequency of the further resonant circuit is electrically connected to the secondary coil, wherein a further means, in particular included in the evaluation unit, for comparison of the determined resonance frequency of the further resonant circuit with a third frequency value f1 and/or with a fourth frequency value f2 is provided.

10. A system according to at least one of the preceding claims,
**characterised in that**
the third frequency value is greater than the fourth frequency value,
in particular wherein the third frequency value is greater than that resonance frequency which the further resonant circuit has when the vehicle is not present,
in particular wherein the fourth frequency value is smaller than that resonance frequency which the further resonant circuit has when the vehicle is not present.

11. A system according to at least one of the preceding claims,
charactersied in that
the further evaluation unit has an oscillator whose produced frequency is controllable.

12. A system according to at least one of the preceding claims,
**characterised in that**
the further evaluation unit has a controller to which acquired values of a physical variable, in particular a current or a voltage, of the oscillator of the further evaluation unit are supplied and which adjusts the frequency of the oscillator such that an optimum physical variable is achieved.

13. A system according to at least one of the preceding claims,
**characterised in that**
the primary winding is provided in the form of a conductor loop additional to a primary coil, in particular wherein the primary coil can be acted upon by a medium frequency current for power transmission to the secondary coil of the vehicle,
wherein the primary coil is galvanically isolated from the primary winding,
in particular wherein the primary coil and the primary winding are plane, in particular in the form of a flat winding, and are arranged parallel to one another, in particular in a stationary manner, in particular therefore at the side closest to the ground,
in particular wherein the winding wire of the primary coil has a cross-sectional area which is at least ten times greater than that of the winding wire of the primary winding.

14. A system according to at least one of the preceding claims,
**characterised in that**
a controllable switch, in particular a short-circuiting device, for short circuiting of the secondary winding is arranged on the vehicle,
wherein a means for generating a clocked, in particular uniformly clocked or pulse-width modulated, control signal of the controllable switch is arranged on the vehicle,
in particular wherein an evaluation means for detecting the detuning, brought about by the control signal, of the determined resonance frequency is provided, in particular is arranged at the stationary side, in particular therefore in the evaluation unit.

## Revendications

1. Système de transmission d'énergie électrique par induction,
dans lequel un véhicule présente des parties métalliques et une bobine secondaire qui présente un enroulement secondaire et un matériau ferritique prévu comme noyau de bobine,
dans lequel un enroulement primaire est disposé de manière stationnaire, auquel est connecté, en particulier en série ou en parallèle, un condensateur pour former un circuit oscillant,
dans lequel une unité d'évaluation est reliée électriquement à l'enroulement primaire pour déterminer la fréquence de résonance du circuit oscillant,
dans lequel un moyen pour comparer la fréquence de résonance déterminée avec une première valeur de fréquence f1 et avec une deuxième valeur de fréquence f2 est prévu, en particulier dont au moins une sortie commande un actionneur, tel qu'un relais ou analogue,
**caractérisé en ce**
**que** la première valeur de fréquence f1 est supérieure à la deuxième valeur de fréquence f2,
dans lequel un dépassement de la valeur f1 permet de détecter l'arrivée d'un véhicule et un passage en dessous de la valeur f2 de détecter l'atteinte d'une position de couplage inductif optimal de la bobine secondaire ainsi que du matériau ferritique à l'enroulement primaire.

2. Système selon la revendication 1,
**caractérisé en ce**
**que** la première valeur de fréquence f1 est supérieure à la fréquence de résonance que le circuit oscillant présente en l'absence du véhicule.

3. Système selon la revendication 1 ou 2,
**caractérisé en ce**
**que** la deuxième valeur de fréquence f2 est inférieure à la fréquence de résonance que le circuit oscillant présente en l'absence du véhicule.

4. Système selon au moins l'une des revendications précédentes,
**caractérisé en ce**
**que** du matériau ferritique supplémentaire est disposé sur l'enroulement primaire, qui agit comme noyau de bobine pour l'enroulement primaire.

5. Système selon au moins l'une des revendications précédentes,
**caractérisé en ce**
**que** la bobine secondaire est entourée par au moins une partie métallique, en particulier dans un plan passant par la bobine secondaire et orienté parallèlement au plan de déplacement du véhicule.

6. Système selon au moins l'une des revendications précédentes,
**caractérisé en ce**
**qu'**une unité d'alimentation comprenant le condensateur peut être commandée par le moyen de telle sorte que, lors du passage en dessous de la deuxième valeur de fréquence f2, un courant à moyenne fréquence est injecté par l'unité d'alimentation dans l'enroulement primaire,
en particulier que, lors du dépassement de la deuxième valeur de fréquence f2, le courant à moyenne fréquence injecté par l'unité d'alimentation dans l'enroulement primaire est coupé.

7. Système selon au moins l'une des revendications précédentes,
**caractérisé en ce**
**que** l'unité d'évaluation présente un oscillateur dont la fréquence générée est commandable.

8. Système selon au moins l'une des revendications précédentes,
**caractérisé en ce**
**que** l'unité d'évaluation présente un régulateur auquel sont amenées les valeurs détectées d'une grandeur physique, en particulier un courant ou une tension, de l'oscillateur et qui règle la fréquence de l'oscillateur de telle sorte qu'un optimum de la grandeur physique soit atteint.

9. Système selon au moins l'une des revendications précédentes,
**caractérisé en ce**
**qu'**un autre condensateur pour former un autre circuit oscillant est connecté à la bobine secondaire, en particulier en série ou en parallèle,
dans lequel une autre unité d'évaluation disposée sur le véhicule pour déterminer la fréquence de résonance de l'autre circuit oscillant est reliée électriquement à la bobine secondaire,
dans lequel un autre moyen, en particulier compris par l'unité d'évaluation, est prévu pour comparer la fréquence de résonance déterminée de l'autre circuit oscillant avec une troisième valeur de fréquence f1 et/ou avec une quatrième valeur de fréquence f2.

10. Système selon au moins l'une des revendications précédentes,
**caractérisé en ce**
**que** la troisième valeur de fréquence est supérieure à la quatrième valeur de fréquence, en particulier dans lequel la troisième valeur de fréquence est supérieure à la fréquence de résonance que présente l'autre circuit oscillant en l'absence du véhicule,
en particulier dans lequel la quatrième valeur de fréquence est inférieure à la fréquence de résonance que présente l'autre circuit oscillant en l'absence du véhicule.

11. Système selon au moins l'une des revendications précédentes,
**caractérisé en ce**
**que** l'autre unité d'évaluation présente un oscillateur dont la fréquence générée est commandable.

12. Système selon au moins l'une des revendications précédentes,
**caractérisé en ce**
**que** l'autre unité d'évaluation présente un régulateur auquel sont amenées les valeurs détectées d'une grandeur physique, en particulier un courant ou une tension, de l'oscillateur de l'autre unité d'évaluation et qui règle la fréquence de l'oscillateur de telle sorte qu'un optimum de la grandeur physique soit atteint.

13. Système selon au moins l'une des revendications précédentes,
**caractérisé en ce**
**que** l'enroulement primaire est prévu sous la forme d'une boucle conductrice en plus d'une bobine primaire,
en particulier dans lequel un courant à moyenne fréquence peut être appliqué à la bobine primaire pour transmettre de la puissance à la bobine secondaire du véhicule,
dans lequel la bobine primaire est électriquement isolée de l'enroulement primaire,
en particulier dans lequel la bobine primaire et l'enroulement primaire sont réalisés plans, en particulier sous forme d'enroulement plat, et sont disposés parallèlement l'un à l'autre, en particulier de manière stationnaire, donc en particulier du côté du sol,
en particulier dans lequel le fil d'enroulement de la bobine primaire présente une section transversale au moins dix fois plus grande que le fil d'enroulement de la bobine primaire.

14. Système selon au moins l'une des revendications précédentes,
**caractérisé en ce**
**qu'**un commutateur commandable, en particulier un court-circuiteur, pour court-circuiter l'enroulement secondaire est disposé sur le véhicule,
dans lequel un moyen pour générer un signal de commande cadencé, en particulier cadencé uniformément ou modulé en largeur d'impulsion, du commutateur commandable est disposé sur le véhicule,
en particulier dans lequel un moyen d'évaluation pour détecter le désaccord de la fréquence de résonance déterminée provoqué par le signal de commande est prévu, en particulier disposé du côté stationnaire, donc en particulier dans l'unité d'évaluation.
